# EUROPÄISCHE PATENTSCHRIFT

(11) **EP 3 719 301 B1**
(45) Veröffentlichungstag und Bekanntmachung des Hinweises auf die Patenterteilung: **09.11.2022**
(21) Anmeldenummer: 19167076.9
(22) Anmeldetag: 03.04.2019
(51) Int. Cl.: F03D 7/02

(54) **VERFAHREN ZUM BETRIEB EINER WINDENERGIEANLAGE MIT MINDESTENS EINEM IN SEINEM BLATTEINSTELLWINKEL VERSTELLBAREN ROTORBLATT**
METHOD FOR OPERATING A WIND TURBINE WITH AT LEAST ONE ROTOR BLADE WITH ADJUSTABLE BLADE ANGLE
PROCÉDÉ DE FONCTIONNEMENT D'UNE ÉOLIENNE DOTÉE D'AU MOINS UNE PALE DE ROTOR À SON ANGLE DE RÉGLAGE DE PALE RÉGLABLE

(43) Veröffentlichungstag der Anmeldung: 07.10.2020
(73) Patentinhaber: Nordex Energy SE & Co. KG, 22419 Hamburg (DE)
(72) Erfinder: Drossel, Detlef, 22851 Norderstedt (DE); Harms, Ulrich, 22339 Hamburg (DE)
(74) Vertreter: Hauck Patentanwaltspartnerschaft mbB

(56) Entgegenhaltungen:
- EP-A2- 2 530 303
- US-A1- 2003 151 259

## Beschreibung

Die vorliegende Erfindung betrifft ein Verfahren zum Betrieb einer Windenergieanlage mit mindestens einem in seinem Blatteinstellwinkel verstellbaren Rotorblatt und einem eine elektrische Leistung in ein elektrisches Versorgungsnetz einspeisenden Generator.

Allgemein ist es bekannt, dass Windenergieanlagen im Falle eines Spannungsfehlers ihre Leistungsaufnahme aus dem Wind reduzieren müssen. Hierzu ist im Stand der Technik vorgesehen, dass auf Spannungseinbrüche mit einer Veränderung des Rotorblatteinstellwinkels reagiert wird.

US 2004/0145188 A1 offenbart eine Windenergieanlage sowie ein Verfahren zum Betreiben einer solchen, wobei ein Rotorblatteinstellwinkel ansprechend auf einen erkannten Spannungsfehler verändert wird, um die Leistungsaufnahme des Rotors zu reduzieren. Eine Änderung des Rotorblatteinstellwinkels erfolgt, wenn eine niederspannungsseitig gemessene Spannung, die als repräsentativ für die Netzspannung angenommen wird, für eine vorgegebene Zeitdauer einen vorbestimmten Wert bezogen auf die Nennspannung unterschreitet.

WO 2008/031434 A2 offenbart eine Windenergieanlage sowie ein Verfahren zum Betreiben einer solchen, wobei ein Rotorblatteinstellwinkel verzögert, nach dem Auftreten einer Überdrehzahl in Folge eines Netzfehlers, verändert wird.

WO 2008/031433 A1 offenbart eine Windenergieanlage sowie ein Verfahren zum Betreiben einer solchen, wobei ein Rotorblatteinstellwinkel ansprechend auf einen erkannten Netzfehler und mechanische Schwingungen oder Betriebslasten verändert wird. Das Auftreten erhöhter Drehzahlen wird bei dem Verfahren zugelassen.

US 2008/0277938 A1 offenbart eine Windenergieanlage, die in ein elektrische Netz einspeist, sowie ein Verfahren zum Betreiben einer solchen, wobei ein Rotorblatteinstellwinkel ansprechend auf einen anormalen Zustand der Windenergieanlage oder in dem elektrischen Netz verändert wird. Ein zustandsabhängiger Selektor wird verwendet, um aus einer Mehrzahl von ermittelten Steuersignalen für den Rotorblatteinstellwinkel auszuwählen. Das Auftreten erhöhter Drehzahlen wird bei dem Verfahren zugelassen.

WO 2009/083447 A2 offenbart eine Windenergieanlage sowie ein Verfahren zum Betreiben einer solchen, wobei ein Rotorblatteinstellwinkel ansprechend auf einen erkannten Netzfehler verändert wird. Ein zustandsabhängiger Selektor wird verwendet, um aus einer Mehrzahl von ermittelten Steuersignalen für den Rotorblatteinstellwinkel auszuwählen.

EP 2 327 878 A1 offenbart einen Rotorblatteinstellwinkelregler für eine Windenergieanlage, der eingerichtet ist, einen Rotorblatteinstellwinkel ansprechend auf eine erkannte Abweichung der DC-Zwischenkreisspannung eines Umrichters, der Spannung am Netzverknüpfungspunkt, der Rotordrehzahl oder der Netzfrequenz zu verändern.

EP 2 196 666 A1 offenbart eine Windenergieanlage, einen Rotorblatteinstellwinkelregler für eine Windenergieanlage sowie ein Verfahren zum Betreiben einer solchen, wobei ein Rotorblatteinstellwinkel ansprechend auf einen erkannten Spannungsfehler verändert wird. Der Wert eines I-Glieds des Rotorblatteinstellwinkelreglers wird ansprechend auf die Detektion eines Netzfehlers über einen Signalimpuls verändert. Der Wert des I-Glieds bleibt auch nach der Fehlerklärung erhalten, so dass eine erneute Beschleunigung des Rotors nach Fehlerklärung verzögert oder dazu weitere Schritte erforderlich sind.

WO 2011/009958 A2 offenbart eine Windenergieanlage sowie ein Verfahren zum Betreiben einer solchen, wobei ein Rotorblatteinstellwinkel ansprechend auf einen erkannten Netzfehler in Abhängigkeit von der Windgeschwindigkeit verändert wird. Das Auftreten erhöhter Drehzahlen wird bei dem Verfahren zugelassen.

EP 2 530 303 A2 offenbart eine Windenergieanlage sowie ein Verfahren zum Betreiben einer solchen, wobei ein Rotorblatteinstellwinkel ansprechend auf einen erkannten Netzfehler in Abhängigkeit von einer Änderung des Generatormoments verändert wird. Das Auftreten erhöhter Drehzahlen wird auch bei dem Verfahren zugelassen.

EP 2 767 711 A1 offenbart eine Windenergieanlage sowie ein Verfahren zum Betreiben einer solchen, wobei ein minimaler Rotorblatteinstellwinkel ansprechend auf einen erkannten Netzfehler in Abhängigkeit von der Netzspannung verändert wird. Das Auftreten erhöhter Drehzahlen kann auch hierbei auftreten.

US 2003/0151259 A1 beschreibt eine Windenergieanlage mit einer variablen Geschwindigkeit. Zur Regelung der abgegebenen Leistung auf einen vorgegebenen Sollwert erfolgt eine Pitchsteuerung. Weichen Leistungsistwert und Leistungssollwert um mehr als 20 % der Nennleistung voneinander ab, wird für den Pitch ein zweiter Pitchwinkel vorgegeben, um eine Überdrehzahl zu verhindern.

Der Erfindung liegt die Aufgabe zugrunde, ein Verfahren zum Betrieb einer Windenergieanlage bereit zu stellen, das im Falle eines Netzfehlers wirksam einen Drehzahlanstieg an der Windenergieanlage im Wesentlichen verhindert oder zumindest deutlich vermindert.

Erfindungsgemäß wird die Aufgabe durch ein Verfahren gemäß Anspruch 1 gelöst. Die Unteransprüche beschreiben vorteilhafte Auseinandergestaltungen des Verfahrens.

Das erfindungsgemäße Verfahren ist vorgesehen und bestimmt zum Betrieb einer Windenergieanlage. Die Windenergieanlage besitzt dabei mindestens ein in seinem Blatteinstellwinkel verstellbares Rotorblatt und zudem einen Generator, über den elektrische Leistung in ein elektrisches Versorgungsnetz eingespeist wird. Das erfindungsgemäße Verfahren erfasst einen Istwert der eingespeisten Leistung. Aus der erfassten Leistung wird eine Leistungsabweichung gegenüber einer Sollleistung bestimmt. Anders als bei Verfahren aus dem Stand der Technik wird bei dem erfindungsgemäßen Verfahren für die Korrektur des Blatteinstellwinkels auf eine Betrachtung der eingespeisten Leistung abgestellt. Für diese wird nach dem erfindungsgemäßen Verfahren, abhängig von einem erfassten Istwert, eine Leistungsabweichung ermittelt. In einem nachfolgenden Schritt wird ein Signalwert für eine Korrektur des Blatteinstellwinkels gesetzt. Der Signalwert wird gesetzt, wenn die Leistungsabweichung über einen vorgegebenen Zeitraum einen vorgegebenen maximalen Gradienten übersteigt. Ebenfalls ist erfindungsgemäß vorgesehen, den gesetzten Signalwert zu löschen, wenn die Leistungsabweichung einen vorbestimmten Minimalwert unterschreitet. Alternativ oder ergänzend dazu kann der Signalwert auch auf Basis eines Vergleichs der Netzspannung mit einem vorgegebenen Sollspannungswert gelöscht werden. Der Vergleich stellt bevorzugt fest, ob der Netzspannungswert sich in einem vorbestimmten Band um den vorgegebenen Sollspannungswert befindet. Durch Setzen und Löschen des Signalwerts ist für das erfindungsgemäße Verfahren zum Betrieb der Windenergieanlage stets ein definierter Zustand für den Signalwert vorgesehen: entweder ist er gesetzt oder der gesetzte Signalwert ist gelöscht. Erfindungsgemäß ist dabei vorgesehen, dass der Signalwert nur dann gelöscht wird, wenn eine Bedingung zum Löschen des Signalwerts erfüllt ist. Ist der Signalwert gesetzt, bleibt dieser auch bei einem Entfallen der ursprünglich für das Setzen zugrundliegenden Bedingung gesetzt.

In einem weiteren Schritt wird ein Korrekturwert für den Blatteinstellwinkel, abhängig von der zeitlichen Änderung der eingespeisten Leistung ermittelt. Das erfindungsgemäße Verfahren ist gekennzeichnet durch ein Zuschalten des Korrekturwerts zu einer Blatteinstellwinkelregelung solange der Signalwert gesetzt ist. Dieses Zuschalten besitzt eine Reihe von regelungstechnischen Vorteilen. Einerseits kann ohne größere Änderung in der Programmierung der Regelungssoftware weiterhin mit der Blatteinstellwinkelregelung gearbeitet werden. Durch die Verwendung des Signalwerts wird nicht in die Arbeitsweise der Blatteinstellwinkelregelung eingegriffen, sondern lediglich ein zusätzlicher Korrekturwert wird an diese angelegt. Zum anderen hat es sich insbesondere für ein schnelles Ändern des Blatteinstellwinkels und damit für eine Begrenzung des Drehzahlanstiegs, als vorteilhaft herausgestellt, nicht auf die Spannung im elektrischen Versorgungsnetz abzustellen, sondern hier auf eine Leistungsänderung abzustellen, da diese über die Bilanz aus der aus dem Wind aufgenommenen und der in das Netz eingespeisten Leistung enger mit der Rotordrehzahl verknüpft ist. Im Fall eines Spannungsfehlers in dem elektrischen Versorgungsnetz kann aufgrund der Begrenzung der Stromtragfähigkeit der involvierten Komponenten insbesondere bei tiefen Spannungsfehlern nur eine limitierte Leistung in das Netz eingespeist werden. Wird von der Windenergieanlage weniger Leistung in das Netz eingespeist, als deren Rotor aus dem Wind aufnimmt, kommt es zu einem Drehzahlanstieg. Überdrehzahlen können zu Schäden an der Windenergieanlage führen. Da verschiedene Netzanschlussrichtlinien zudem Anforderungen hinsichtlich der Leistungseinspeisung nach der Beseitigung von transienten Spannungsfehlern stellen, ist eine leistungsbasierte Regelung von Vorteil. Mithilfe der Leistungsänderung kann eine schnelle und bezüglich der Leistungseinspeisung verbesserte Korrektur des Blatteinstellwinkels vorgenommen werden und so der Drehzahlanstieg frühzeitig begrenzt werden. In dem erfindungsgemäßen Verfahren wird der Korrekturwert für den Blatteinstellwinkel als eine Änderungsgeschwindigkeit für den Blatteinstellwinkel bestimmt. Dies bedeutet, dass zu der an der Blatteinstellwinkelregelung anliegenden drehzahlabhängigen Änderungsgeschwindigkeit für den Blatteinstellwinkel der leistungsabhängige Korrekturwert hinzuaddiert werden kann, wenn der Signal wert gesetzt ist.

In einer bevorzugten Ausgestaltung des erfindungsgemäßen Verfahrens wird für die Leistungsabweichung auf eine Differenz aus erfasster Leistung und einem Sollwert für die Leistung zurückgegriffen. Der besondere Vorteil bei diesem Verfahren ist, dass auch auf nicht im Versorgungsnetz vorliegende Fehlerfälle reagiert werden kann. Andere Fehlerursachen sind beispielsweise ein Defekt im Hauptumrichter, der, zum Beispiel bei Ausfall einer leistungswandelnden Baugruppe (Power Stack), ebenfalls zu einem Drehzahlanstieg führen kann. Indem mit der Leistungsabweichung festgestellt werden kann, dass die Abweichung der eingespeisten Leistung von dem Sollwert der einzuspeisenden Leistung zu groß ist, kann auf einen Fehler frühzeitig reagiert werden.

In einer bevorzugten Ausgestaltung ist der Korrekturwert abhängig von der zeitlichen Änderung der eingespeisten Leistung, also der Istleistung. An einem Bestimmungsblock für den Korrekturwert beispielsweise liegt Istwert der Leistung an. Der Vorsteuerblock ist eingerichtet, anliegende Istwerte zyklisch zu speichern und die zeitliche Änderung der Istleistung über wenigstens eine Zeitperiode aus einem aktuellen und wenigstens einem vorhergehenden Istwert zu bestimmen. Der Vorsteuerblock kann eingerichtet sein, Leistungsänderungen ΔP über kurze Zeiträume Δt von 1 ms oder ΔP/Δt über größere Zeiträume Δt, z.B. eine viertel oder eine halbe Netzperiode (5 bzw. 10ms in 50Hz-Netzen), zu ermitteln. Der Vorsteuerblock kann zusätzlich dazu eingerichtet sein, eine Glättung über mehrere Messwerte vorzunehmen. Die Glättung kann beispielsweise abhängig von der zeitlichen Änderung der erfassten Leistung erfolgen.

In einer bevorzugten Ausgestaltung ist ein Drehzahlregler ausgelegt, um die Änderungsgeschwindigkeit für den Blatteinstellwinkel, abhängig von einem Istwert für eine Drehzahl zu bestimmen. Bei dieser Ausgestaltung wird beispielsweise die Drehzahl des Rotors bestimmt, hierbei kann an dem Triebstrang beispielsweise auf eine schnelle oder eine langsame Welle und deren Drehzahl zurückgegriffen werden. Abhängig von dem Istwert der Drehzahl wird dann eine Änderungsgeschwindigkeit für den Blatteinstellwinkel vorgegeben. Die Änderungsgeschwindigkeit für den Blatteinstellwinkel liegt bevorzugt an einer Blatteinstellwinkelregelung an, die bevorzugt einen Integrator besitzt, der die Änderungsgeschwindigkeit für den Blatteinstellwinkel zu einem Sollwert für den Blatteinstellwinkel aufintegriert.

In einer weiteren bevorzugten Ausgestaltung des erfindungsgemäßen Verfahrens ist zumindest in einem Bereich der Leistungsänderung der Korrekturwert umso größer, umso größer die Leistungsabweichung ist. Dies bedeutet, mit zunehmender Leistungsabweichung wird in diesem Bereich auch ein zunehmend größerer Korrekturwert verwendet. Es liegt in diesem Bereich also eine streng monotone Abhängigkeit vor, insbesondere eine monoton steigende oder auch eine streng monoton steigende Abhängigkeit.

Bevorzugt handelt es sich bei dem erfassten Istwert der eingespeisten Leistung um eine eingespeiste Wirkleistung. Ebenso kann bei einer Priorisierung der

Blindleistung auch auf einen Istwert der eingespeisten Blindleistung abgestellt werden.

Das erfindungsgemäße Verfahren zum Betrieb einer Windenergieanlage wird nachfolgend an einem Ausführungsbeispiel näher erläutert. Es zeigen:
- Fign. 1a, b: eine Windenergieanlage mit einer schematischen Ansicht von außen sowie in einem Blockdiagramm zur elektrischen Anlage und
- Fig. 2: eine schematische Teilansicht zur Regelung des Blatteinstellwinkels.

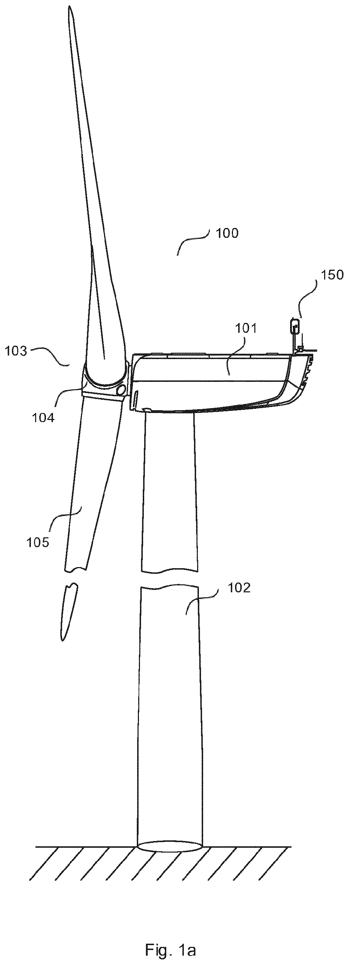

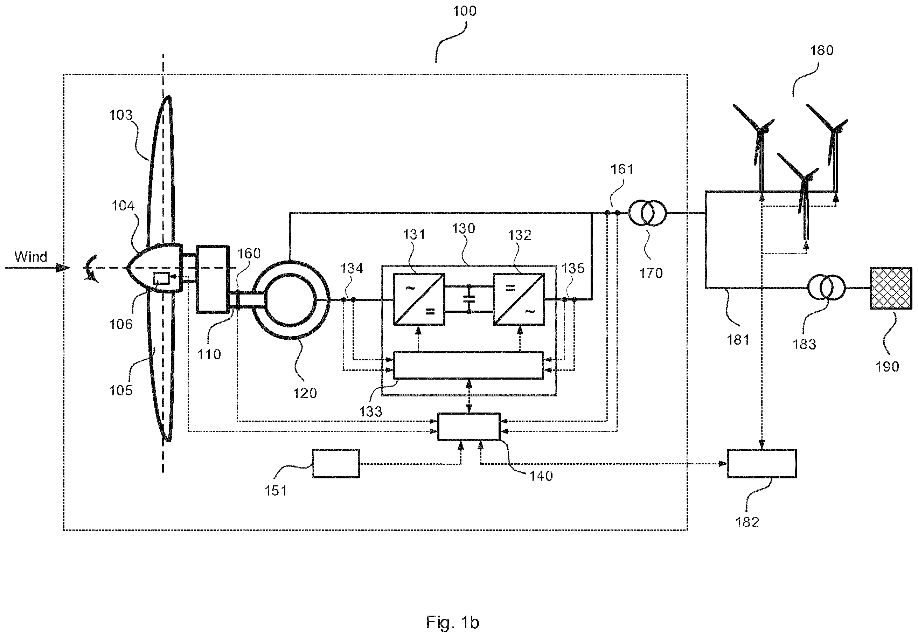

Fig. 1a zeigt eine Windenergieanlage 100 mit einer Gondel 101 und einer Standvorrichtung 102. Die Standvorrichtung ist in dem dargestellten Beispiel als ein Turm ausgebildet. Die Windenergieanlage 100 besitzt einen Rotor 103 mit einer Rotornabe 104, an der drei Rotorblätter 105 angeordnet sind für eine Drehung um eine im Wesentlichen horizontal verlaufende Achse. An der Gondel 101 ist ein Sensorarray 150 zur Erfassung von Umgebungsparametern der Windenergieanlage 100 vorgesehen. Zum Beispiel kann zur Erfassung der Windgeschwindigkeit am dem Sensorarray 150 ein Anemometer 151(vgl. Fig. 1b) vorgesehen sein. Die drei Rotorblätter 105 sind jeweils mit einer Blattwinkelstellvorrichtung 106 verbunden (vgl. Fig. 1b), die eine azimutale Drehung der Rotorblätter erlaubt. Die Rotorblätter weisen einen kreisförmigen Blattanschlussbereich auf und sind für die azimutale Drehung um eine zu dem Blattanschlussbereich senkrechte Achse drehbar in der Rotornabe gelagert. Die Drehbewegung kann z.B. über einen elektrischen oder einen hydraulischen Antrieb ausgeführt werden. Alternativ oder ergänzend kann auch eine Ansteuerung von in den Rotorblättern integrierten Aktoren erfolgen, die die aerodynamischen Eigenschaften der Rotorblätter verändern (aktive Anströmregelung, bzw. engl. "Active Flow Control"). Eine alternative Anströmregelung kann die erfindungsgemäß verwendete Rotorblatteinstellwinkelregelung in besonders vorteilhafter Weise unterstützen.

Fig. 1b zeigt in einer schematischen Ansicht im Wesentlichen den elektrischen Aufbau einer Windenergieanlage 100 in einem Windpark 180, der an ein elektrisches Versorgungsnetz 190 angeschlossen ist und in dieses eine elektrische Leistung einspeist. Der den Rotor 103 anströmende Wind (linker Rand) versetzt den Rotor 103 mit der Rotornabe 104 und den Rotorblättern 105 in eine Drehbewegung. Die Drehbewegung treibt über einen Antriebsstrang 110 einen Generator 120 an. In dem dargestellten Ausführungsbeispiel treibt der Antriebsstrang 110 den Rotor des Generators 120 an. Die elektrische Konfiguration des Generators 120 entspricht der einer doppeltgespeisten Asynchronmaschine, deren Statorkreis direkt und deren Rotorkreis indirekt, über einen Hauptumrichter 130 mit dem elektrischen Versorgungsnetz 190 Die Einspeisung elektrischer Leistung in das Versorgungsnetz 190 erfolgt sowohl über den Stator des Generators, wie auch über den Hauptumrichter 130. Der Hauptumrichter 130 besitzt einen generatorseitigen Umrichter 131 und einen netzseitigen Umrichter 132. Über den generatorseitigen Umrichter 131 erfolgt eine Regelung des Rotorfeldes des Generators 120 und damit des Statorfeldes und der von dem Stator direkt in das elektrische Versorgungsnetz 190 eingespeisten Leistung, so dass die Einspeisung netzsynchron erfolgt. Der netzseitige Umrichter 132 ist eingerichtet, Leistung aus dem Rotorkreis netzsynchron in das elektrische Versorgungsnetz 190 einzuspeisen. Beide Umrichter 131, 132 sind über einen Gleichspannungszwischenkreis miteinander verbunden. Zur Regelung ist ein Umrichterregler 133 vorgesehen, der mit einem Windenergieanlagenregler 140 verbunden ist. Der Windenergieanlagenregler 140 ist wiederum mit einem Windparkregler 182 verbunden, der mit den weiteren Windenergieanlagen im Windpark 180 zu einem bidirektionalen Datenaustausch in Verbindung steht. Über einen Transformator 170 ist die Windenergieanlage 100 elektrisch mit einem über den Windpark verteilten Mittelspannungsnetz 181 verbunden. Das Mittelspannungsnetz 181 ist über einen weiteren Transformator 183 elektrisch mit dem elektrischen Versorgungsnetz 190 verbunden. Die von der Windenergieanlage eingespeiste Leistung wird über das Mittelspannungsnetz in das elektrische Versorgungsnetz eingespeist.

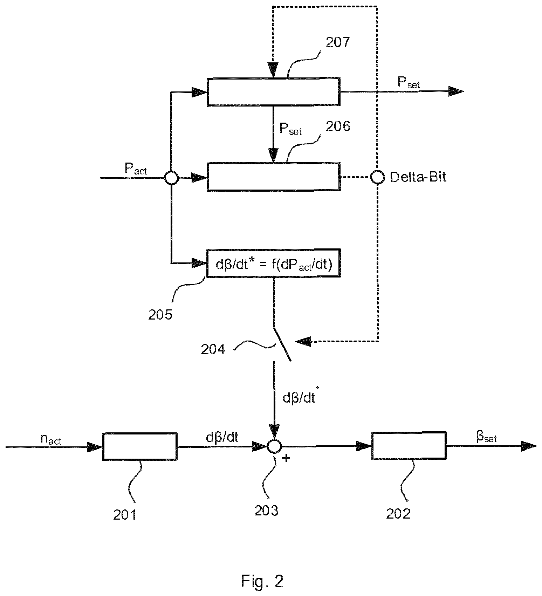

Der Windenergieanlagenregler 140 ist kommunikativ mit den Blattwinkelstellvorrichtungen 106 verbunden und unter anderem eingerichtet, Sollwerte für den Rotorblatteinstellwinkel und/oder dessen zeitlicher Änderung an die Blattwinkelstellvorrichtungen 106 zu übermitteln. Der Windenergieanlagenregler 140 ist mit verschiedenen Sensoren der Windenergieanlage verbunden. Der Antriebsstrang 110 der Windenergieanlage weist einen Drehzahlsensor 160 auf, der eingerichtet ist, Drehzahlmesswerte an den Windenergieanlagenregler 140 zu übermitteln. Somit liegt an dem Windenergieanlagenregler 140 der Istwert der Drehzahl n_{act} an. Auch Sensoren des Sensorarrays 150, wie z.B. das Anemometer 151 sind mit dem Windenergieanlagenregler 140 verbunden. An dem Windenergieanlagenregler 140 liegen ferner Strom- und/oder Spannungswerte und/oder aus diesen Werten berechnete Größen, wie beispielweise die Netzfrequenz, Phasenwinkel und/oder die eingespeiste Wirk- und/oder Blindleistung an, die über einen Sensor 161 auf der Seite der Windenergieanlage 100 vor dem Transformator 170 erfasst bzw. aus den Messgrößen bestimmt werden. Der Umrichterregler 133 empfängt seine Signale von dem Windenergieanlagenregler 140 und erhält Strom- und/oder Spannungsmesswerte und/oder aus diesen Werten berechnete Größen, die rotor- bzw. netzseitig von dem Hauptumrichter 130 über entsprechende Messsensoren 134, 135 erfasst werden. Der Windenergieanlagenregler 140 gibt dem Umrichterregler 133 beispielsweise Sollwerte für die Leistung, wie beispielsweise eine Wirkleistung oder eine Blindleistung vor. Der Windenergieanlagenregler 140 kann dem Hauptumrichterregler 130 auch eine Priorität für Blind- und/oder Wirkleistung vorgeben. Der Windenergieanlagenregler 140 ist insbesondere eingerichtet, das anhand der nachfolgend beschriebenen Fig. 2 auszuführen bzw. dessen Ausführung zu ermöglichen.

Fig. 2 zeigt die zum Verständnis wichtigen Aspekte des Regelungsverfahrens für den Blatteinstellwinkel, das während des Betriebs der Windenergieanlage kontinuierlich erfolgt. Die nachfolgend beschriebenen Regelungselemente können sowohl in Software als auch in Hardware verkörpert sein und beispielsweise Teil des Windenergieanlagenreglers 140 sein. Die Regelung besitzt einen Drehzahlregler 201 sowie einen Rotorblatteinstellwinkelregler 202. An dem Drehzahlregler 201 liegt ein Istwert für eine Drehzahl n_{act} an, aus der eine Änderungsgeschwindigkeit für den Rotorblatteinstellwinkel dß/dt bestimmt wird. Ein solcher Drehzahlregler 201 ist aus dem Stand der Technik bekannt und der Fachmann ist vertraut damit, wie der Istwert der Drehzahl in eine Änderung des Rotorblatteinstellwinkels umgerechnet werden muss.

Über den Rotorblatteinstellwinkelregler 202 wird die an dem Regler anliegende Änderungsgeschwindigkeit für den Rotorblatteinstellwinkel aufintegriert und ein Rotorblattwinkel βₛₑₜ als Sollwert vorgegeben. Der Sollwert βₛₑₜ kann dann an einem oder mehreren Rotorblättern eingestellt werden. Das hier vorgeschlagene Verfahren ist aber grundsätzlich auch mit Verfahren kombinierbar, bei denen eine individuelle Regelung der einzelnen Rotorblätter des Rotors erfolgt.

Ein erfasster Istwert für die Leistung P_{act} wird für eine Korrektur des Blatteinstellwinkels in verschiedener Weise ausgewertet. In einem Differenzblock 206 wird in dem dargestellten Ausführungsbeispiel ein Differenzwert ΔPₙ zwischen dem an dem Differenzblock 206 anliegenden Leistungsistwert P_{act} und dem an dem Differenzblock 206 anliegenden Leistungssollwert Pₛₑₜ gebildet. Ferner wird in dem Differenzblock 206 die aufgetretene Differenz ΔPₙ mit einem vorgegebene Maximalwert ΔPₘₐₓ und einem Minimalwert ΔPₘᵢₙ verglichen. Hierbei ist es so, dass wenn ΔPₙ den Maximalwerts ΔPₘₐₓ überschreitet, der Signalwert (Delta-Bit) gesetzt wird. Ist der auftretende Differenzwert ΔPₙ unterhalb des Minimalwerts ΔPₘᵢₙ, wird der Signalwert gelöscht. Hierbei kann vorgesehen sein, dass der Maximalwert ΔPₘₐₓ zum Setzen des Signalwerts größer ist als der Minimalwert ΔPₘᵢₙ für das Löschen des Signalwerts. Durch die Verwendung eines solchen Hysterese-Verfahrens kann ein instabiles Hin- und Herschalten zwischen ein und ausgeschaltetem Signalwert vermieden werden. Technisch handelt es sich bei dem Signalwert um ein Flag, das, gesetzt oder nicht gesetzt, von der Regelung ausgewertet wird. Der Maximalwert ΔPₘₐₓ und der Minimalwert ΔPₘᵢₙ können beispielsweise als Bruchteil der Nennleistung Pₙₒₘ der Windenergieanlage vorgegeben sein. Beispielweise kann der Maximalwert ΔPₘₐₓ im Bereich von etwa 10% bis 20% der Nennleistung Pₙₒₘ und der Minimalwert ΔPₘᵢₙ im Bereich von etwa 5% bis 10% der Nennleistung Pₙₒₘ vorgegeben sein. Ist der Signalwert einmal gesetzt, bleibt dieser gesetzt bis eine Bedingung für das Löschen vorliegt. Der Signalwert bleibt auch dann gesetzt, wenn die Bedingung, die für das Setzen des Signalwerts ursächlich war, entfällt.

Zum Setzen des Signalwerts können auch komplexere Bedingungen überprüft werden. Beispielsweise kann der Vergleich der Leistungsdifferenz ΔPₙ mit dem Maximalwert ΔPₘₐₓ zum Zeitpunkt Tₙ mit einer weiteren UND-Bedingung verknüpft werden. Als weitere Bedingung kann beispielsweise überprüft werden, ob die Leistungsdifferenz ΔPₙ₋₁ zu einem vorherigen Zeitpunkt Tₙ₋₁ nicht größer als der der Maximalwert ΔPₘₐₓ gewesen ist. Das Setzen des Signalwerts erfolgt dann nur, wenn beide Bedingungen erfüllt sind, also wenn die aktuelle Leistungsdifferenz ΔPₙ den Maximalwert ΔPₘₐₓ übersteigt und die zurückliegende Leistungsdifferenz ΔPₙ₋₁ den Maximalwert ΔPₘₐₓ nicht übersteigt. Liegen die Zeitpunkt Tₙ₋₁ und Tₙ um beispielweise nur um wenige Millisekunden bis zu etwa 10 Millisekunden auseinander, kann eine schnelle Änderung der abgegebenen Leistung festgestellt und als Auslösekriterium für das Verstellen der Rotorblätter verwendet werden. Um eine solche zusätzliche Bedingung überprüfen zu können, kann der Differenzblock 206 über einen Speicher verfügen, in welchem die anliegende Istwerte und/oder daraus bestimmte Differenzwerte zyklisch gespeichert werden. Dafür kann ein digitaler Ringspeicher vorgesehen sein, der kontinuierlich in einem gewissen Zeitraum mit einer vorgegebenen Taktung anliegende Werte speichert und diese nach dem Ablaufen einer vorgegebenen Zeit wieder überschreibt, um den Speicherplatz für neue Daten wieder freizugeben. Beispielsweise werden i ermittelte Leistungsdifferenzen (ΔPₙ, ΔPₙ₋₁, ..., ΔPₙ₋ᵢ) alle 10 Millisekunden und zyklisch über einen Zeitraum von 50 ms gespeichert. Die Taktung und der Zeitraum können jedoch bei Bedarf verringert oder erhöht werden. In dem Differenzblock 206 liegen somit die Werte ΔPₙ und ΔPₙ₋₁ für die Überprüfung der zuvor genannten Bedingung vor.

Zum Setzen des Signalwerts kann zusätzlich zu den beiden vorangegangenen Beispielen eine weitere Bedingung überprüft werden, die als ODER-Bedingung allein für das Setzen des Signalwerts ausreichend ist. Beispielsweise kann der Vergleich der Leistungsdifferenz ΔPₙ mit dem Maximalwert ΔPₘₐₓ zum Zeitpunkt Tₙ mit einer weiteren UND-Bedingung verknüpft werden. Als weitere Bedingung kann beispielsweise überprüft werden, ob die zeitliche Änderung der Leistungsdifferenz über einen vorgegeben Zeitraum kleiner als ein maximaler Gradientengrenzwert (ΔP/ΔT)ₘₐₓ ist. Der Differenzblock 206 kann zum Beispiel eingerichtet sein, die Differenz ΔP zwischen der aktuellen Leistungsdifferenz ΔPₙ zum Zeitpunkt Tₙ und der Leistungsdifferenz ΔPₙ₋₄ bei einem vorherigen (gegenüber dem vorherigen Zeitpunkt Tₙ₋₁) länger zurückliegenden Zeitpunkt Tₙ₋₄ zu ermitteln. Der Gradient ΔP/ΔT ergibt sich durch die Division der Differenz ΔP der beiden Leistungsdifferenzen durch die zeitliche Differenz ΔT der beiden Zeitpunkte Tₙ und ΔPₙ₋₄. Das Setzen des Signalwerts erfolgt dann nur, wenn beide Bedingungen erfüllt sind, also wenn die aktuelle Leistungsdifferenz ΔPₙ den Maximalwert ΔPₘₐₓ übersteigt und der Leistungsgradient (ΔP/ΔT) den maximalen Gradientengrenzwert (ΔP/ΔT)ₘₐₓ nicht übersteigt. Liegen die Zeitpunkt Tₙ₋₄ und Tₙ beispielweise um 30-50 Millisekunden auseinander, kann so auf durch das Aufschalten der Korrekturgröße auf Mehrfachfehler reagiert werden, auch wenn der Fehler, der zum ursprünglichen Auslösen des Signalwerts, bereits zwischenzeitlich durch das Vorliegen eine für das Löschen hinreichenden Bedingung gelöscht wurde. Der zuvor beschriebene Ringspeicher ist so auszulegen, dass die für die Überprüfung der Bedingung benötigten Werte aus dem Speicher ausgelesen werden können.

Zum Löschen des Signalwerts können ergänzend oder alternativ auch andere Bedingungen überprüft werden. Beispielweise kann der Differenzblock eingerichtet sein, weitere Messgrößen mit vorgegebenen Grenzwerten zu vergleichen oder in der Regelung der Windenergieanlage vorliegende Fehlerzustände oder Fehlermeldungen auszuwerten. Dazu kann beispielweise auf Messgrößen der Sensoren (150, 151, 160, 161) zurückgegriffen werden. Beispielsweise kann der Signalwert gelöscht werden, wenn der Netzspannungswert in ein vorbestimmtes Band um den vorgegebenen Sollspannungswert zurückkehrt.

Der erfasste Istwert für die Leistung P_{act} liegt zudem an einem Leistungsregler 207 an. Der Leistungsregler 207 ist eingerichtet, die Leistungseinspeisung der Windenergieanlage zu regeln. Dazu liegen an diesem unter anderem Leistungssollwerte des Windparkreglers 182 und weitere Messgrößen an. Der Leistungsregler 207 bestimmt den Leistungssollwert Pₛₑₜ, der zur Erzeugung und Einspeisung der entsprechenden Leistung an einem Umrichter oder einer sonstigen elektrischen Regelung für den Generator anliegt (hier nicht gezeigt). Zudem liegt der von dem Leistungsregler 207 ermittelte Leistungssollwert an dem Differenzblock 206 an, wo zusammen mit dem Istwert P_{act} das Delta-Bit als Signalwert bestimmt wird. Der Leistungsregler 207 ist eingerichtet, für die Regelung der Windenergieanlage bestimmten Leistungssollwerte zyklisch zu speichern. Der Speicher ist dabei so konfiguriert, dass zeitlich zurückliegende Werte wenigstens für einen vorgegeben kurzen Zeitraum gespeichert bleiben. Hierfür kann ein digitaler Ringspeicher vorgesehen sein. An dem Leistungsregler 207 liegt das Delta-Bit als Signalwert an, das von dem Differenzblock 206 ausgegeben wird. Der Leistungsregler 207 ist eingerichtet, zyklisch zu überprüfen, ob der Signalwert gesetzt ist und, wenn dieser gesetzt ist, einen zeitlich zurückliegenden Leistungssollwert P_{set,freeze} aus dem Speicher abzurufen und zu speichern, bis der der Signalwert wieder gelöscht wurde. Hierfür kann ein zusätzlicher Speicher vorgesehen sein. Der Leistungsregler 207 ist weiterhin so eingerichtet, dass dieser, so langer der Signalwert gesetzt ist, anstelle des aktuellen Leistungssollwerts Pₛₑₜ den gespeicherten zurückliegenden Leistungssollwert P_{set,freeze} an den Differenzblock 206 ausgibt. Dadurch kann die Bestimmung der Leistungsabweichung in dem Differenzblock 206 abhängig von dem vor dem Eintritt eines Fehlers gesetzten Leistungssollwert erfolgen. Zusätzlich kann der gespeicherte zurückliegende Leistungssollwert P_{set,freeze} auch für die Regelung der Windenergieanlage herangezogen werden und kann beispielsweise für einen Übergangszeitraum als Sollwert vorgegeben werden, nachdem der Signalwert gelöscht worden ist. Das Abrufen erfolgt so, dass dabei ein zeitlich zurückliegender Leistungssollwert ausgewählt wird, der ausreichend vor dem Eintreten des Fehlers bestimmt worden ist. Da das vorgeschlagene Verfahren für Fehler, die einen schnellen Eingriff in die Rotorblattregelung nötig machen, vorgeschlagen wird, kann der zurückliegende Wert gegenüber dem aktuellen Wert um nur wenige 1 bis 10 Millisekunden zurückliegen. Die Taktung kann beim Speichern im für alle Verfahrensschritte gleich gewählt sein, z.B. 5 oder 10 Millisekunden. Im Übrigen ist der Leistungsregler 207 eingerichtet, weiterhin Leistungssollwerte zu ermitteln und zu speichern, auch wenn der Signalwert gesetzt ist. Nach Löschen des Signalwerts bzw, nach Verstreichen eines Übergangszeitraums kann der Leistungsregler 207 die Leistungssollwertvorgabe für den Normalbetrieb fortsetzen.

Fig. 2 zeigt ferner einen Rotorblatteinstellwinkelvorsteuerblock 205, bei dem ein Korrekturwert dβ/dt^{∗} abhängig von dem aktuellen Istwert P_{act} bestimmt wird. Hier wird auf die zeitliche Änderung des Leistungsistwerts dP_{act}/dt zurückgegriffen. Der funktionale Zusammenhang zwischen der zeitlichen Änderung des Leistungsistwerts und des Korrekturwerts ist dabei so, dass mindestens bereichsweise eine strenge Monotonie vorliegt, also eine zunehmende Änderung der Leistungsabweichung mit dP_{act}/dt zu einem größeren Korrekturwert dβ/dt^{∗} führt. Der Rotorblatteinstellwinkelvorsteuerblock 205 ist eingerichtet, anliegende Istwerte P_{act} zyklisch zu speichern und die zeitliche Änderung der Istleistung dP_{act}/dt über wenigstens eine Zeitperiode aus dem aktuellsten und wenigstens einem vorhergehenden Istwert zu bestimmen. Auch hierfür kann ein digitaler Ringspeicher vorgesehen sein. Der Rotorblatteinstellwinkelvorsteuerblock 205 kann eingerichtet sein, Leistungsänderungen ΔP über infinitesimale Zeiträume Δt von 1 ms oder ΔP/Δt über größere Zeiträume Δt, z.B. eine viertel oder eine halbe Netzperiode (5 bzw. 10ms in 50Hz-Netzen), zu ermitteln. Der Vorsteuerblock kann auch eingerichtet sein, eine Glättung über mehrere Messwerte vorzunehmen.

Bei dem erfindungsgemäßen Verfahren ist vorgesehen, dass ein Schalter 204, abhängig von dem Signalwert, geöffnet oder geschlossen wird. Bei geschlossenem Schalter 204 liegt der Korrekturwert dβ/dt^{∗} an einem Additionsglied 203 an und wird zu der von dem Drehzahlregler 201 ausgegebenen Änderungsgeschwindigkeit für den Rotorblatteinstellwinkel dß/dt hinzuaddiert. Die Summe aus dem von dem Drehzahlregler 201 bestimmten Sollwert dß/dt und dem von dem Rotorblatteinstellwinkelvorsteuerblock 205 bestimmten Korrekturwert dβ/dt^{∗} liegt dann an dem Rotorblatteinstellwinkelregler 202 an. Ist der Korrekturterm positiv, so wird bei der Addition der Sollwert für die Änderungsgeschwindigkeit für den Rotorblatteinstellwinkel erhöht. Entsprechend erhöht sich der Wert des Integrals des Rotorblatteinstellwinkelreglers 202. Es wird also schneller gepitcht, also der Rotorblatteinstellwinkel mit größerer Geschwindigkeit geändert.

### Bezugszeichenliste

- 100: Windenergieanlage
- 101: Gondel
- 102: Standvorrichtung
- 103: Rotor
- 104: Rotornabe
- 105: Rotorblatt
- 106: Blattwinkelstellvorrichtung
- 110: Antriebsstrang
- 120: Generator
- 130: Hauptumrichter
- 131: generatorseitiger Umrichter
- 132: netzseitiger Umrichter
- 133: Umrichterregler
- 134: Strom/Spannungssensor
- 135: Strom/Spannungssensor
- 140: Windenergieanlagenregler
- 150: Sensorarray
- 151: Anemometer
- 160: Drehzahlsensor
- 161: Strom/Spannungssensor
- 170: Transformator
- 180: Windpark
- 181: Mittelspannungsnetz
- 182: Windparkregler
- 183: Transformator
- 190: elektrisches Übertragungsnetz
- 201: Drehzahlregler
- 202: Rotorblatteinstellwinkelregler
- 203: Additionsglied
- 204: Schalter
- 205: Rotorblatteinstellwinkelvorsteuerblock
- 206: Differenzblock
- 207: Leistungsregler
- 208: Speicherblock

## Patentansprüche

1. Verfahren zum Betrieb einer Windenergieanlage mit mindestens einem in seinem Blatteinstellwinkel verstellbaren Rotorblatt und einem eine Leistung in ein elektrisches Versorgungsnetz einspeisenden Generator, durch folgende Schritte gekennzeichnet:
- Erfassen eines Ist-Werts der eingespeisten Leistung (P_{act}),
- Bestimmen einer Leistungsabweichung basierend auf der erfassten Leistung (P_{act}),
- Setzen eines Signalwerts für eine Korrektur eines Sollwerts für den Rotorblatteinstellwinkel des mindestens einen Rotorblatts, wenn die Leistungsabweichung über einen vorgegebenen Zeitraum einen maximalen Gradientengrenzwert übersteigt,
- Löschen des Signalwerts, wenn die Leistungsabweichung einen vorbestimmten Minimalwert unterschreitet und/oder auf Basis eines Vergleichs der Netzspannung mit einem vorgegebenen Sollspannungswert,
- Ermitteln eines Korrekturwerts (dβ/dt^{∗}) für einen Sollwert des Rotorblatteinstellwinkels abhängig von einer Leistungsänderung und
- Zuschalten des Korrekturwerts (dβ/dt^{∗}) zu einer Rotorblatteinstellwinkelregelung solange der Signalwert gesetzt ist, wobei der Korrekturwert (dβ/dt^{∗}) für den Blatteinstellwinkel als eine Änderungsgeschwindigkeit (dβ/dt) für den Blatteinstellwinkel bestimmt wird.

2. Verfahren nach Anspruch 1, **dadurch gekennzeichnet, dass** die Leistungsabweichung als Differenz aus der erfassten Leistung (P_{act}) und einem Sollwert für die Leistung (Pₛₑₜ) bestimmt wird.

3. Verfahren nach Anspruch 2, **dadurch gekennzeichnet, dass** der Korrekturwert (dβ/dt^{∗}) abhängig von der Differenz aus der erfassten Leistung (P_{act}) und einem Sollwert für die Leistung (Pₛₑₜ) bestimmt wird.

4. Verfahren nach Anspruch 1, **dadurch gekennzeichnet, dass** die Leistungsabweichung als zeitliche Änderung (dP_{act}/dt) der erfassten Leistung (P_{act}) bestimmt wird.

5. Verfahren nach Anspruch 4, **dadurch gekennzeichnet, dass** der Korrekturwert (dβ/dt^{∗}) abhängig von der zeitlichen Änderung (dP_{act}/dt) der erfassten Leistung (P_{act}) bestimmt wird.

6. Verfahren nach einem der Ansprüche 1-5, **dadurch gekennzeichnet, dass** die Blatteinstellwinkelregelung die Änderungsgeschwindigkeit (dβ/dt) für den Blatteinstellwinkel aus einem Istwert für eine Drehzahl (n_{act}) bestimmt.

7. Verfahren nach Anspruch 6, **dadurch gekennzeichnet, dass** die Blatteinstellwinkelregelung einen Integrator aufweist, der die Änderungsgeschwindigkeit für den Blatteinstellwinkel zu einem Sollwert für den Blatteinstellwinkel (βₛₑₜ) aufintegriert.

8. Verfahren nach einem der Ansprüche 1 bis 7, **dadurch gekennzeichnet, dass** mindestens in einem Bereich der Leistungsabweichung der Korrekturwert umso größer ist, umso größer die Leistungsabweichung ist.

9. Verfahren nach einem der Ansprüche 1 bis 8, **dadurch gekennzeichnet, dass** eine Wirkleistung als Istwert der eingespeisten Leistung erfasst wird.

10. Verfahren nach einem der Ansprüche 1 bis 9, **dadurch gekennzeichnet, dass** eine Blindleistung als Istwert der eingespeisten Leistung erfasst wird.

## Claims

1. A method for operating a wind turbine with at least one rotor blade having a rotor blade pitch angle that is adjustable and a generator feeding power to an electrical supply grid, **characterized by** the following steps:
- capturing an actual value of the fed-in power (P_{act});
- determining a power deviation based on the captured power (P_{act});
- setting a signal value for a correction of a setpoint value for the rotor blade pitch angle of the at least one rotor blade when the power deviation exceeds a maximum gradient threshold value over a specified period of time;
- clearing the signal value when the power deviation falls below a predetermined minimum value and/or on the basis of a comparison of the grid voltage with a specified target voltage value;
- establishing a correction value (dβ/dt^{∗}) for a setpoint value of the rotor blade pitch angle depending on a power change, and
- applying the correction value (dβ/dt^{∗}) for a rotor blade pitch control as long as the signal value is set, wherein the correction value (dβ/dt^{∗}) for the rotor blade pitch angle is determined as a change speed (dβ/dt) for the rotor blade pitch angle.

2. The method according to Claim 1, **characterized in that** the power deviation is determined as a difference of the captured power (P_{act}) and a setpoint value for the power (Pₛₑₜ).

3. The method according to Claim 2, **characterized in that** the correction value (dβ/dt^{∗}) is determined depending on the difference of the captured power (P_{act}) and a setpoint value for the power (Pₛₑₜ).

4. The method according to Claim 1, **characterized in that** the power deviation is determined as a temporal change (dP_{act}/dt) of the captured power (P_{act}).

5. The method according to Claim 4, **characterized in that** the correction value (dβ/dt^{∗}) is determined depending on the temporal change (dP_{act}/dt) of the captured power (P_{act}).

6. The method according to any one of Claims 1-5, **characterized in that** the rotor blade pitch control determines the change speed (dβ/dt) for the rotor blade pitch angle from an actual value for a rotational speed (n_{act}).

7. The method according to Claim 6, **characterized in that** the rotor blade pitch control has an integrator which integrates the change speed for the rotor blade pitch angle into a setpoint value for the rotor blade pitch angle (βₛₑₜ).

8. The method according to any one of Claims 1 to 7, **characterized in that** the larger the correction value, the larger the power deviation is at least in one interval of the power deviation.

9. The method according to any one of Claims 1 to 8, **characterized in that** an active power is captured as the actual value of the fed-in power.

10. The method according to any one of Claims 1 to 9, **characterized in that** a reactive power is captured as the actual value of the fed-in power.

## Revendications

1. Procédé de fonctionnement d'une éolienne dotée d'au moins une pale de rotor réglable dans son angle de réglage de pale et d'un générateur fournissant une puissance à un réseau d'alimentation électrique, **caractérisé par** les étapes suivantes :
détection d'une valeur réelle de la puissance (P_{act}) fournie,
détermination d'un écart de puissance sur la base de la puissance (P_{act}) détectée,
définition d'une valeur de signal pour une correction d'une valeur de consigne pour l'angle de réglage de pale de rotor de l'au moins une pale de rotor, lorsque l'écart de puissance est supérieur à une valeur limite de gradient maximale pendant une durée prédéfinie,
suppression de la valeur de signal lorsque l'écart de puissance est inférieur à une valeur minimale prédéterminée et/ou sur la base d'une comparaison de la tension de réseau avec une valeur de tension de consigne prédéfinie,
calcul d'une valeur de correction (dβ/dt^{∗}) pour une valeur de consigne de l'angle de réglage de pale de rotor en fonction d'une variation de puissance et
prise en compte de la valeur de correction (dβ/dt^{∗}) dans un réglage d'angle de réglage de pale de rotor tant que la valeur de signal est définie, la valeur de correction (dβ/dt^{∗}) pour l'angle de réglage de pale étant déterminée comme une vitesse de variation (dβ/dt) pour l'angle de réglage de pale.

2. Procédé selon la revendication 1, **caractérisé en ce que** l'écart de puissance est déterminé comme une différence entre la puissance (P_{act}) détectée et une valeur de consigne pour la puissance (Pₛₑₜ).

3. Procédé selon la revendication 2, **caractérisé en ce que** la valeur de correction (dβ/dt^{∗}) est déterminée en fonction de la différence entre la puissance (P_{act}) détectée et une valeur de consigne pour la puissance (Pₛₑₜ).

4. Procédé selon la revendication 1, **caractérisé en ce que** l'écart de puissance est déterminé comme une variation dans le temps (dP_{act}/dt) de la puissance (P_{act}) détectée.

5. Procédé selon la revendication 4, **caractérisé en ce que** la valeur de correction (dβ/dt^{∗}) est déterminée en fonction de la variation dans le temps (dP_{act}/dt) de la puissance (P_{act}) détectée.

6. Procédé selon l'une des revendications 1 à 5, **caractérisé en ce que** le réglage d'angle de réglage de pale détermine la vitesse de variation (dβ/dt) pour l'angle de réglage de pale à partir d'une valeur réelle pour une vitesse de rotation (n_{act}).

7. Procédé selon la revendication 6, **caractérisé en ce que** le réglage d'angle de réglage de pale présente un intégrateur intégrant la vitesse de variation pour l'angle de réglage de pale à une valeur de consigne pour l'angle de réglage de pale (βₛₑₜ).

8. Procédé selon l'une des revendications 1 à 7, **caractérisé en ce qu'**au moins dans une plage de l'écart de puissance, la valeur de correction est d'autant plus élevée que l'écart de puissance est élevé.

9. Procédé selon l'une des revendications 1 à 8, **caractérisé en ce qu'**une puissance active est détectée comme valeur réelle de la puissance fournie.

10. Procédé selon l'une des revendications 1 à 9, **caractérisé en ce qu'**une puissance réactive est détectée comme valeur réelle de la puissance fournie.
